(19) Europäisches Patentamt
European Patent Office
Office européen des brevets

(11) Publication number: 0 386 543 A2

# (12) EUROPEAN PATENT APPLICATION

(21) Application number: 90103501.4

(22) Date of filing: 23.02.90

(51) Int. Cl.5: B32B 27/36, B32B 27/30

(30) Priority: 08.03.89 US 320662

(43) Date of publication of application: 12.09.90 Bulletin 90/37

(84) Designated Contracting States: DE FR GB IT

(71) Applicant: MOBAY CORPORATION
Mobay Road
Pittsburgh Pennsylvania 15205(US)

(72) Inventor: Macy, Richard J.
336 Oakgrove Court
Wexford, PA 15090(US)
Inventor: Sarver, Larry D.
130 Mc Candless Place
Wexford, PA 15090(US)

(74) Representative: Gremm, Joachim, Dr. et al
Bayer AG Konzernverwaltung RP Patente Konzern
D-5090 Leverkusen 1, Bayerwerk(DE)

## (54) Coextruded structures.

(57) The present invention is directed to a novel multilayered coextruded thermoplastic structure useful as a packaging material comprising a barrier layer and a polycarbonate layer adjacent thereto said structure being characterized in the absence of an adhesive layer therefrom. The polycarbonate resin is characterized by its low molecular weight. In a preferred embodiment the polycarbonate is further characterized by its special chain terminating agent. The invention is also directed to an improvement in the coextrusion process of a multilayered coextruded thermoplastic structure comprising the absence of an adhesive layer between the barrier layer and the polycarbonate layer thereof.

EP 0 386 543 A2

# COEXTRUDED STRUCTURES

## Field of the Invention

The invention relates to a multilayered thermoplastic structure having good vapor barrier properties and more particularly to a coextruded structure comprising a polycarbonate layer, and a polyvinylidene chloride layer and having no tie layer interposted therebetween.

## Background of the Invention

Resistance to the permeation of gases and liquid is a required characteristic of modern packaging materials. In addition these materials are required to have good mechanical properties. While polycarbonate is an excellent material for molding a variety of plastic articles including films and packaging, its barrier properties are somewhat deficient. The combination of polyvinylidene chloride - a material known for its excellent barrier properties - with polycarbonate resins has been alluded to in the literature yet no successful coextruded structure containing these materials has been reported. U.S. Patent 3,420,729 disclosed an article comprising an outer shell and an inner rigidifier component and an adhesive layer placed therebetween. Polycarbonate is mentioned among the suitable materials for the outer shell. Polyvinylidene chloride (saran) is disclosed in U.S. Patents 3,561,629, 3,717,544, 3,908,070 and 4,107,362 to be suitable as the intermediate layer in a laminated article. In U.S. Patent 3,606,958 there was disclosed a container having a wall comprising a load-carrying lamina and a second, sealing lamina. Polycarbonate is listed among the materials suitable for the load-bearing lamina while polyvinylidene chloride is disclosed among the suitable materials for the fluid barrier laminae. Also relevant in this connection is the container disclosed in U.S. Patent 3,869,056. In U.S. Patent 4,475,241 there is disclosed a packaging film which comprises a base sheet having a polycarbonate coating and an adhesive tie layer.

It is perhaps instructive to note that the art regards the coextruded structure of polycarbonate and polyvinylidene to be an impossibility. In a paper entitled "Materials and Components for High Temperature Barrier Packaging," L. E. Baccaro et al (1984 Polymers, Lamination and Coatings Conference, Book 2, Proceedings of the Technical Association of the Pulp and Paper Industry, pp 639) it was noted that among the drawbacks of polyvinylidene chloride is that "with the current coextrusion feedblock systems on the market, it is virtually impossible to process with PC without degradation". In fact, as late as 1987 in an article entitled "A Comparison of Barrier Plastics for Packaging; The packaging composites of EVOH and PVDC" by M. Boysen, Rheinberg, Kunststoff 77 (1987) 5, pp. 522/525, it was clearly stated that coextrusion of PVDC and polycarbonates is not possible. Related technology is disclosed in U.S. Patent application Serial No. 261,662 filed October 24, 1988. Significantly, however, the coextruded structure of that patent application requires an adhesive, tie layer.

## SUMMARY OF THE INVENTION

The present invention is directed to a novel, multilayered coextruded thermoplastic structure useful as a packaging material comprising a barrier layer of polyvinylidene chloride and a polycarbonate layer; said structure being characterized in the absence of an adhesive layer therefrom. The polycarbonate resin of the invention is characterized by its low molecular weight. In a preferred embodiment the polycarbonate resin is also characterized by its special chain terminating agent.

## DETAILED DESCRIPTION OF THE INVENTION

The polycarbonates of the present invention are thermoplastic aromatic resins having a weight average molecular weight of about 10,000 to about 40,000, particularly 12,000 to 30,000 and preferably 15,000 to 25,000. These resins are characterized by their high melt index which ranged from about 20 to about 60 gm/10 min. in accordance with ASTM D-1288. Polycarbonates of this type are known and are readily available in commerce. The polycarbonate resin of the invention is based on dihydroxy compounds of the

formula

HO - Z - OH (II)

wherein Z is a divalent aromatic radical having 6-30 carbon atoms. These include both mononuclear and polynuclear dihydroxy compounds, which may contain heteroatoms and may be substituted. The following are among the suitable compounds: hydroquinone, resorcinol, dihydroxydiphenyls, bis-(hydroxyphenyl)-alkanes, bis-(hydroxyphenyl)-cycloalkanes, bis-(hydroxyphenyl) sulphides, bis-(hydroxyphenyl) ethers, bis-(hydroxyphenyl) ketones, bis-(hydroxyphenyl) sulphoxides, bis-(hydroxyphenyl) sulphones and α,α′-bis-(hydroxyphenyl)-diisopropylbenzenes, and their nuclear-alkylated and nuclear-halogenated compounds. These and other suitable dihydroxy compounds are described in U.S. Patent Nos. 3,028,365; 2,999,835; 3,148,172; 3,271,368; 2,991,273; 3,271,367; 3,280,078; 3,014,891; and 2,999,846, all of which are incorporated herein by reference, in German Offenlegungsschriften Nos. 1,570,703; 2,063,050; 2,036,052; and 2,211,956; French Patent Specification No. 1,561,518 and in the monograph H. Schnell, Chemistry and Physics of Polycarbonates, Interscience Publishers, New York, 1964.

Examples of preferred dihydroxy compounds are: 4,4′-dihydroxydiphenyl, 2,2-bis-(4-hydroxyphenyl)-propane, 2,4-bis-(4-hydroxyphenyl)-2-methylbutane, 1,1-bis-(4-hydroxyphenyl)-cyclohexane, α,α′-bis-(4-hydroxyphenyl)-p-diiso-propylbenzene, 2,2-bis-(3-methyl-4-hydroxyphenyl)-propane, 2,2-bis-(3-chloro-4-hydroxyphenyl)-propane, bis-(3,5-dimethyl-4-hydroxyphenyl)-methane, 2,2-bis-(3,5-dimethyl-4-hydroxy phenyl)-propane, bis-(3,5-dimethyl-4-hydroxyphenyl) sulphone, 2,4-bis-(3,5-dimethyl-4-hydroxyphenyl)-2-methylbutane, 1,1-bis-(3,5-dimethyl-4-hydroxyphenyl)-cyclohexane, α,α′-bis-(3,5-dimethyl-4-hydroxyphenyl)-p-diisopropyl-benzene, 2,2-bis-(3,5-dichloro-4-hydroxyphenyl)-propane, and 2,2-bis-(3,5-dibromo-4-hydroxyphenyl)-propane.

Examples of particularly preferred dihydroxy compounds are: 2,2-bis-(4-hydroxyphenyl)-propane, 2,2-bis-(3,5-dimethyl-4-hydroxyphenyl)-propane, 2,2-bis-(3,5-dichloro-4-hydroxyphenyl)-propane, 2,2-bis-(3,5-dibromo-4-hydroxyphenyl)-propane, and 1,1-bis-(4-hydroxyphenyl)-cyclohexane.

Mixtures of the above mentioned dihydroxy compounds may also be used.

Small amounts of a branching agent, preferably between about 0.05 and 2.0 mol % (relative to diphenols employed) may be added. These are compounds having a functionality of three or more, in particular those with three or more phenolic hydroxyl groups, which are added for the purpose of improving the flow properties. Examples of these compounds include phloroglucinol, 4,6-dimethyl-2,4,6-tri-(4-hydroxyphenyl)-hept-2-ene, 4,6-dimethyl-2,4,6-(4-hydroxyphenyl)-heptane, 1,3,5-tri-(4-hydroxyphenyl)-benzene, 1,1,1-tri-(4-hydroxyphenyl)-ethane, tri-(4-hydroxyphenyl)-phenylmethane, 2,2-bis-[4,4-bis-(4-hydroxyphenyl)-cyclohexyl]-propane, 2,4-bis-(4-hydroxyphenylisopropyl)-phenol, 2,6-bis-(2-hydroxy-5′-methylbenzyl)-4-methylphenol, 2-(4-hydroxyphenyl)-2-(2,4-dihydroxyphenyl)-propane, hexa-[4-(4-hydroxyphenylisopropyl)-phenyl] orthoterephthalic acid ester, tetra-(4-hydroxyphenyl)-methane, tetra-[4-(4-hydroxyphenylisopropyl) phenoxy]-methane and 1,4-bis-[(4′,4″-dihydroxy-triphenyl)-methyl]-benzene. Other suitable trifunctional compounds are 2,4-dihydroxybenzoic acid, trimesic acid, cyanuric chloride and 3,3-bis-(3-methyl-4-hydroxyphenyl)-2-oxo-2,3-dihydroindole.

The polycarbonates according to the invention are preferably prepared by the phase boundary process (as described for instance in H. Schnell, Chemistry and Physics of Polycarbonates, Polymer Reviews, Volume IX, page 33 et. seq., Interscience Publishers, (1964)), incorporated herein by reference.

Regulating the molecular weight of the polycarbonate resin is attained by use of monohydric aromatic hydroxy compounds. These are well known and include monophenols such as cumylphenol, m- and p-methylphenol, m- and p-ethylphenol, m- and p-propylphenol and m- and p-isopropylphenol, p-bromophenol and m-and p-butylphenol, especially p-tert. butylphenol. The preferred embodiments entail a polycarbonate resin having chain terminators conforming to

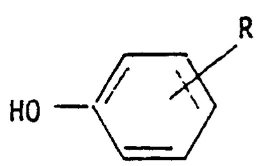

(I)

wherein R represents a branched alkyl radical consisting of 4 to 10 carbon atoms. Most preferred polycarbonate resins having chain terminators of this type have been disclosed in U.S. Patent 4,269,964 which is incorporated herein by reference. The preferred polycarbonates represent an improvement in terms of hydrolysis resistance, critical thickness and mechanical and thermal properties.

Examples of compounds of formula I which are suitable according to the invention are

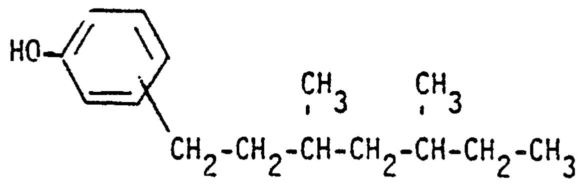

(III)

and

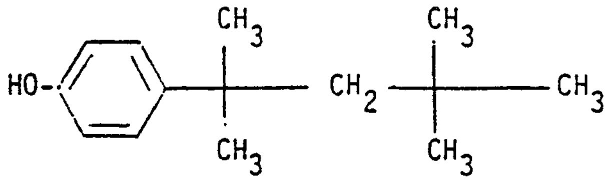

(IV)

Either one compound of formula I or a mixture comprising compounds of formula I may be employed for the preparation of the polycarbonates according to the invention.

Polyvinylidene chloride polymers and copolymers are well known and widely used barrier materials. The barrier resins of the invention are polymers having a high content of vinylidene chloride.

Vinylidene chloride is a vinyl monomer which conforms structurally to

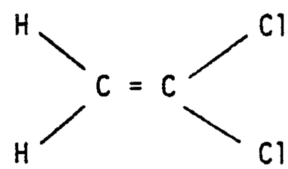

and which upon copolymerization form a variety of useful resins. Saran, a representative resin of this family of resins, is characterized by its low permeability to gases and liquids and flammability resistance.

In the context of the present invention, the barrier layer is preferably a copolymer of vinylidene chloride having a melt point of about 198 to 205° C and a decomposition temperature of about 210° C.

The barrier material of the invention preferably comprises at least 70 weight percent of vinylidene chloride, the remainder being of one or more of the suitable copolymerizable monomers selected among olefins and substituted olefins including such monomers as unsaturated carboxylic acids, methyl, ethyl, isobutyl, butyl, octyl and 2-ethylhexyl acrylates and methacrylates, phenyl methacrylate, cyclohexyl methacrylate, p-cyclohexyl phenyl methacrylate, chloroethyl methacrylate, 2-nitro-2-methyl-propyl methacrylate and the corresponding esters of acrylic acid, methyl-α-chloroacrylate, octyl α-chloroacrylate, methyl isopropenyl ketone, acrylonitrile, methacrylonitrile, methyl vinyl ketone, vinyl chloride, vinyl acetate, vinyl propionate, vinyl chloroacetate, vinyl bromide, styrene, vinyl naphthalene, ethyl vinyl ether, N-vinyl phthalimide, N-vinyl succinimide, N-vinyl carbazole, isopropenyl acetate, acrylamide, methacrylamide or monoalkyl substitution products thereof, phenyl vinyl ketone, diethyl fumarate, diethyl maleate, methylene diethyl maleate, dichloro vinylidene fluoride, dimethyl itaconate, diethyl itaconate, dibutyl itaconate, vinyl pyridine, maleic anhydride and allyl glycidyl ether.

Since its transmission properties are virtually unaffected by moisture or steam, the barrier resin is ideal for use in food packaging applications. Unfortunately, however, the color of this resin is heat sensitive such that it turns amber-beige upon exposure to a temperature higher than about 350° F. Further, at high temperatures, polyvinylidene chloride undergoes degradation which yields highly corrosive hydrochloric acid.

Polyvinylidene chloride resins are noted for their resistance to gas and liquid permeation. Oxygen permeabilities at 23° C range from about 0.04 to 1.0 cc-mil/100 in.$^2$ - day - atm. and are unaffected by the presence of moisture. Carbon dioxide permeabilities are about 0.1 to 2.4 cc. The permeation of n-hexane is about $10^{-3}$ - $10^{-4}$ g-mil/100 in.$^2$ - day, while water vapor transmission rates are 0.05 to 0.5 g at 37.8° C and 90% relative humidity. Among the preferred polyvinylidene chloride resins suitable in the present application is Experimental PVDC Resin XU-32009.00, a product of the Dow Chemical Company. It is characterized by its barrier properties which are summarized as: Oxygen transmission 0.15 cc-mil/100 in.$^2$ 24 hrs. atm @

73° F and 75% RH, ASTM D-1434, water vapor transmission rate 0.10 g mil/100 in.$^2$ 24 hrs. @ 100° F and 90% RH, ASTM D-96 and permeability to carbon dioxide 0.25 cc-mil/100 in.$^2$ 24 hrs. atm @ RT.

The barrier properties of the polyvinylidene chloride layer depends on its thickness. In the context of the present invention the trade-off between economics and properties dictates that the thicknesses of the polyvinylidene chloride layer be of the order of about 0.001" to about 0.015", preferably the thickness is about 0.0066" to about 0.012". Excellent properties were obtained in a structure which included two polycarbonate layers each having a thickness of 0.011" and polyvinylidene chloride layer having a thickness of 0.003".

Typical plasticizers which may be incorporated in the polyvinylidene chloride barrier resin include acetyl tributyl citrate, epoxidized soybean oil, dibutyl sebecate and copolymers of ethylene and vinyl acetate.

Coextrusion is a well known process. Any of a number of the art recognized processes, including the use of a Dow block, Welex block, and a multimanifold die are suitable. In the preparation of the structure described below, use was made of a Cloeren coextrusion block. See for instance U.S. Patent 4,600,550 which is incorporated herein by reference. The structures thus produced are suitable in the preparation of containers, films, or sheets where excellent barrier properties are desired.

Structures within the scope of the invention have been prepared and their properties evaluated. Among the suitable structures there was prepared a coextruded sheet consisting of polycarbonate, barrier layer and polycarbonate layers. In these structures the barrier layer was Dow Chemicals XU 32009.05. The polycarbonate was a homopolymer based on bisphenol-A having a molecular weight of about 25,000, characterized in that its chain terminator conforms to formula (I) above and having a melt flow index of 60 gm/10 min. The melt temperature of the polycarbonate was about 430° F (measured at the center of the die).

The structure coextruded in accordance with the invention may contain additional coextruded layers including conventional polycarbonate resins as long as the additional layers are separated from the polyvinylidene chloride layer by the polycarbonate resin of the invention.

In coextruding the structure of the invention it is important to operate the polycarbonate extruder at a low to medium shear screw and at a low rpm preferably below 40 rpm in order to maintain as low a melt temperature as possible. It is also important that the screw in the polycarbonate extruder contain no high-shear mixing elements. In addition, the polyvinylidene chloride must have a short residence time in the extruder, adapter and die in order to minimize degradation; preferably the residence time should not exceed 60 seconds.

The flow rate of the combined, multilayer structure through the coextrusion adapter and die or through the multimanifold die should be high, to minimize residence time.

The extruded multilayer melt must be cooled immediately. The conventional technique is to extrude onto a temperature controlled metal roll such as a 3-roll stack. The contact roll, center roll in this case, should have a somewhat cooler temperature than would normally be used for polycarbonate; a 30° C difference is desirable.

The parameters set forth below describe the coextrusion process which was used in practicing the invention.

The die used for the coextrusion of the structure was a Cloeren seven layer die fed by four extruders. The film produced can be described as a ABCDCBA structure where A, B and C each represent a polycarbonate layer and where D represents a polyvinylidene chloride layer.

The operating conditions of each of the four extruders is as follows:

Extruder A $2\frac{1}{2}$ ", 30:1 Davis Standard Extruder

Barrel zone 1 470° F
2 450° F
3 400° F
4 395° F
Adapter 5 395° F
6 395° F
Screw speed 17 RPM

Extruder B $2\frac{1}{2}$ ", 30:1 Davis Standard Extruder

Barrel zone 1 470° F
2 450° F
3 400° F
4 395° F
Adapter 5 395° F
6 395° F

Screw speed 25 RPM

Extruder C $1\frac{1}{2}$ ", 24:1 Davis Standard Extruder

Barrel zone 1 450° F

2 420° F

3 395° F

4 370° F

Adapter 5 395° F

6 395° F

Screw speed 32 RPM

Extruder D $1\frac{1}{2}$ ", 24:1 Davis Standard Extruder

Barrel zone 1 300° F

2 280° F

3 270° F

4 270° F

Adapter 5 270° F

6 270° F

Screw speed 75 RPM Cloeren Feed Block 350° F

Die zone 1 400° F

2 400° F

3 400° F

The screw in Extruder A was a medium shear screw, Extruder B was a low shear screw, Extruder C and D were medium shear.

The structure thus produced had high clarity and high light transmission. The D-layer added a yellow cast to the film but degradation in the form of bubbles was minimal and the multilayered structure was deemed to be satisfactory. Samples were produced at 5, 10 and 25 mils thickness with the polyvinylidene chloride layer consisting of 15-20% of the total thickness.

The invention thus described is not limited by any specific coextrusion technique for forming thermoplastic multilayered structures. Neither is the invention limited in terms of the thickness or flexibility of the layers. While the invention has been illustrated with reference to specific details, changes and modifications made therein do not amount to a departure from the scope of the invention.

## Claims

1. A coextruded multilayered structure comprising a barrier layer and immediate thereto a polycarbonate layer, said barrier layer comprising a copolymer containing at least 70% vinylidene chloride and one or more olefins or substituted olefins, said polycarbonate being characterized in that its weight average molecular weight is about 10,000 to 40,000, said structure being characterized in that it contains no adhesive layer interposed between said barrier layer and said polycarbonate layer.

2. The coextruded multilayered structure of Claim 1 wherein said polycarbonate is characterized in that its structure comprises residues of a chain stopper conforming to

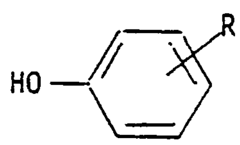

wherein R denotes a branched $C_4$-$C_{10}$ alkyl radical.

3. In the process of coextruding a multilayered structure comprising a barrier layer and a polycarbonate layer the improvement comprising the absence of an adhesive layer between said polycarbonate layer and said barrier layer said polycarbonate having a weight average molecular weight of about 10,000 to 40,000 and said barrier layer comprising a copolymer containing at least 70% vinylidene chloride and one or more olefins or substituted olefins.

4. The improvement of Claim 3 wherein said polycarbonate is further characterized in that it contains residues of a chain stopper conforming to

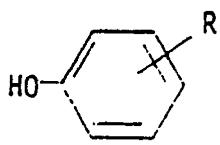

wherein R denotes a branched $C_4$-$C_{10}$ alkyl radical.

5. The improvement of Claim 4 wherein said chain stopper conforms to

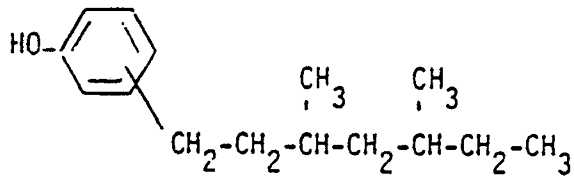

6. The improvement of Claim 4 wherein said chain stopper conforms to